(19) Europäisches Patentamt
European Patent Office
Office européen des brevets

(11) Publication number: **0 071 405 A1**

# (12) EUROPEAN PATENT APPLICATION

(21) Application number: 82303855.9

(22) Date of filing: 21.07.82

(51) Int. Cl.[3]: C 08 L 57/04
C 08 F 218/08, C 08 F 246/00
//C07C69/54

(30) Priority: 25.07.81 GB 8123006

(43) Date of publication of application: 09.02.83 Bulletin 83/6

(84) Designated Contracting States: BE CH DE FR GB IT LI NL SE

(71) Applicant: BP Chemicals Limited
Belgrave House 76 Buckingham Palace Road
London, SW1W 0SU(GB)

(72) Inventor: Biggin, Ian Stuart BP Chemicals Limited
Hayes Road Sully
Penarth South Glamorgan CF6 2YU, Wales(GB)

(74) Representative: Harry, John et al,
BP INTERNATIONAL LIMITED Patents and Licensing
Division Chertsey Road
Sunbury-on-Thames Middlesex TW16 7LN(GB)

## (54) Polymeric compositions containing a polymer latex and an internal plasticizer.

(57) The present invention relates to polymeric compositions containing a polymer latex and an internal plasticizer, and which compositions are capable of producing flexible, thermoplastic polymer films. The internal plasticizer comprise an adduct of the general formula (I):

$$CH_2 = \overset{\displaystyle R}{\overset{|}{C}} - CO.O(\overset{\displaystyle R^1}{\overset{|}{CH}}.CH_2O)(\overset{\displaystyle R^2}{\overset{|}{CH}}.CH_2O)_nR^3 \quad (I)$$

wherein

R is an H atom, a methyl group or an ethyl group;
$R^2$ is a group selected from methyl, ethyl and phenyl groups;
$R^3$ is an H atom or a $C_1$ - $C_4$ alkyl group; and
n is an integer from 1 - 20.

Specific examples of polymeric latices which may be internally plasticized include those derived from the polymers and copolymers of vinyl acetate, vinyl chloride, methyl methacrylate and styrene. The adducts, in which $R_3$ represents H, can link with the polymer through their unsaturated linkage and still have a free hydroxyl group which gives an added flexibility in terms of the range of products that can be produced.

EP 0 071 405 A1

# POLYMERIC COMPOSITIONS CONTAINING A POLYMER LATEX AND AN INTERNAL PLASTICIZER

The present invention relates to polymeric compositions containing a polymer latex and an internal plasticizer, and which compositions are capable of producing flexible, thermoplastic polymer films.

Polymer films may be produced in the form of rigid (unplasticized) films or as flexible films (containing external plasticizers or comonomers). Typical external plasticizers for flexible films are the various phthalate, phosphate, sebacate, adipate and azelate esters of aliphatic alcohols and epoxidised oils. Some copolymerisable esters which have a vinyl unsaturation eg butyl acrylate, 2-ethyl hexyl acrylate, the fumarates and the maleates can act as "internal" plasticizers in polymer latices, because of their ability to lower the film forming temperature, and hence these internal plasticizers cannot migrate out of the film. However, even the polymers derived from these esters have a relatively high "glass transition temperature". The glass transition temperature (Tg) is a temperature at which a polymeric material changes from a glassy to a rubbery behaviour. In other words this is the temperature above which molecular freezing is just overcome. Molecular freezing is an undesirable feature in polymers, especially in polymer films which are subjected to stress and strain particularly in films on substrates subject to dimensional changes. For example, the homopolymer of vinyl versatate (VEOVA, Registered Trade Mark) has a Tg of about 0°C whilst that of butyl acrylate is about -55°C.

It has now been found that a specific group of internal plasticizers has a much lower glass transition temperature.

Accordingly, the present invention is a polymeric compositon capable of forming flexible thermoplastic films and containing a polymer latex and an internal plasticizer, characterised in that the internal plasticizer comprises an adduct of the general formula (I)

$$CH_2 = \overset{R}{\overset{|}{C}} - CO.O(\overset{R^1}{\overset{|}{CH}}.CH_2O)(\overset{R^2}{\overset{|}{CH}}.CH_2O)_nR^3 \qquad (I)$$

wherein R is an H atom, a methyl group or an ethyl group;

$R^1$ is a methyl group or an ethyl group;

$R^2$ is a group selected from methyl, ethyl and phenyl groups;

$R^3$ is an H atom or a $C_1 - C_4$ alkyl group; and

n is an integer from 1 - 20.

These adducts may be prepared by initially esterifying acrylic acid or methacrylic acid with propylene oxide, propylene glycol, butylene oxide or butylene glycol to produce a monohydroxyester. Where glycols are used they are preferably 1,2-glycols. The monoester may thereafter be reacted in a step-wise manner with one or more olefin oxides or glycols, or with a random mixture of dissimilar olefin oxides or glycols, or with preformed blocks of polyoxyalkylenes or polyoxyarylenes. The olefin oxide reacted with the monohydroxyester may be the same as or different from that initially reacted with the acid to produce the ester. Instead of the hydroxyester, the end product may be an ether derivative of the ester, the ether grouping preferably being a methyl or an ethyl group.

The monohydroxy ester is suitably hydroxypropyl methacrylate or hydroxybutyl methacrylate, most preferably hydroxypropyl methacrylate, and may be prepared by reacting methacrylic acid with the appropriate olefin oxide. Methods of preparing this ester are claimed and described in our British patent No 1195485 and in our published European patent application No 0014041. The adduct may thereafter be

produced by reacting the hydroxypropyl methacrylate with one or more units of another olefin oxide such as propylene oxide, butylene oxide or styrene oxide. An adduct between polyoxypropylene and hydroxypropyl methacrylate is most preferred. Such an adduct has the formula (II):

$$CH_2=\overset{CH_3}{\overset{|}{C}}.CO.O(\overset{CH_3}{\overset{|}{C}H}.CH_2O)(\overset{CH_3}{\overset{|}{C}H}.CH_2O)_nH \qquad (II)$$

and in this case n suitably represents an integer between 4 and 8. A similar adduct of the formula (III)

$$CH_2=\overset{CH_3}{\overset{|}{C}}.CO.O(\overset{CH_3}{\overset{|}{C}H}.CH_2O)(\overset{C_2H_5}{\overset{|}{C}H}.CH_2O)_nH \qquad (III)$$

in which a polyoxybutylene is used can also be prepared.

The number of olefin oxide units in a given adduct will depend on the end use of the polymer and on the nature of the polymer latex or emulsion itself. It is suitably between 2 and 20 preferably between 4 and 12.

The homopolymer adducts of the present invention have very low glass transition temperatures (Tg). For example, the Tg of the polymer of an adduct formed from hydroxypropyl methacrylate and five units of propylene oxide is below -70°C.

The internal plasticizers of the present invention may comprise the adducts of formula (I) either alone or in combination with other conventional monomers including both the so-called 'hard' and 'soft' monomers. Examples of the 'hard' monomers include vinyl acetate, styrene, methylmethacrylate and vinyl chloride. Examples of the 'soft' monomers include vinyl versatate (sold as VEOVA, Registered Trade Mark), butyl acrylate, 2-ethylhexyl acrylate and the like.

For instance, a polymeric emulsion which traditionally uses five parts of vinyl versatate can be replaced by one part of the adduct of formula (II) and four parts of vinyl acetate.

Specific examples of polymeric latices which may be internally plasticised by the adducts of the present invention include those derived from the polymers and copolymers of vinyl acetate, vinyl chloride, methyl methacrylate and styrene.

The amount of the adduct to be used in a particular polymeric latex will depend upon the nature of the latex and the end use of the latex. As a general guide the amount of the adduct is suitably between 0.1 and 50% by weight of the total polymeric content of the latex.

Unlike conventional internal plasticizing agents, the adducts aave a further advantage in that the adducts, in which $R_3$ represents H, link with the polymer through their unsaturated linkage and still have a free hydroxyl group. The presence of a free hydroxyl group in the polymer gives an added flexibility in terms of the range of products that can be produced. For example, the free hydroxyl group may be cross linked with melamine-formaldehyde resins, isocyanates and the like.

The present invention is further illustrated with reference to the following Examples.

In the following Examples the trade names and abbreviations used have the following significance:

| | | |
|---|---|---|
| Cellobond* HEC 10T | - | A hydroxyethyl cellulose which acts as a protective colloid - marketed by BP Chemicals Ltd. |
| Bisomer* PPM 6 | - | An adduct of hydroxypropyl-methacrylate and five moles of propylene oxide which acts as the internal plasticizer - marketed by BP Chemicals Ltd. |
| Antarox* CO-850 | - | A condensate of nonyl phenol and 20 moles of ethylene oxide which acts as a non-ionic surfactant. |
| Aerosol* A102 | - | A disodium ethoxylated alcohol half ester of sulphosuccinic acid. |
| Aerosol* A103 | - | A disodium ethoxylated nonyl phenol half ester of sulphosuccinic acid. |

* Registered Trade Mark

Aersol* OT - A sodium dioctyl sulpho succinate (Aerosols marketed by Cyanamid).

MFFT - Minimum Film Forming Temperature

Veova* - Vinyl versatate

*Registered Trade Mark

EXAMPLE 1

Vinyl acetate/Bisomer PPM6 (93/7 by wt) Latex - Similar in MFFT to vinyl acetate/butyl acrylate (80/20 by wt) Latex

Reactor Charge

| | |
|---|---|
| Water | 326.6 g |
| Cellobond HEC 10T | 2 g |
| Sodium Bicarbonate | 0.2 g |
| Antarox CO-850 | 3 g |
| Aerosol A103 (34%) | 11.8 g |
| Potassium Persulphate | 2 g |

Monomer Mix

| | |
|---|---|
| Vinyl Acetate | 373.4 |
| Bisomer PPM6 | 26.6 g |

Method

a. Preparation of Reactor Charge

The protective colloid was dissolved in the water and left to stand overnight. The surfactants were then added and, whilst purging with nitrogen the solution was brought to 70°C. The persulphate and bicarbonate were then added and stirred to dissolve.

b. Preparation of Monomer Mix

The vinyl acetate and Bisomer PPM6 were mixed together and the mixture agitated whilst purging with nitrogen for 15 mins. The monomer mixture was placed in an addition vessel over the reactor.

c. Addition of the Monomer Mix to the Reactor

When the reactor contents reached 70°C the nitrogen flow rate was reduced to a minimum and the monomer addition commenced. Initiation was notable as a blue tint to the reactor contents and a slight exotherm occured. The monomer mix was added over 3½-4½ hours (typically four hours).

Following the addition of the monomer mix, the latex was held for 1-1½ hours at 70°-75°C. After this period, the latex was cooled, and discharged.

Typical Properties

| | |
|---|---|
| Solids | 54.8% |
| Viscosity (Brookfield RVF Spindle 2, 23°C, 20 rpm) cP | 675 |
| pH | 4.2 |

EXAMPLE 2

Vinyl Acetate/Bisomer PPM6 (97/3 by wt) Latex - Similar in MFFT to Vinyl Acetate/Veova (85/15 by wt) Latex

Reactor Charge

| | |
|---|---|
| Water | 310 g |
| Cellobond HECIOT | 4.8 g |
| Sodium Bicarbonate | 1.0 g |
| Antarox CO-850 | 1.0 g |
| Aerosol A102 (31%) | 26.7 g |
| Potassium Persulphate | 0.4 g |

| Monomer Mix | | Separate Addition | |
|---|---|---|---|
| Vinyl Acetate | 388 g | Potassium Persulphate | 0.7 g |
| Bisomer PPM6 | 12 g | Water | 35 g |

Method

The protective colloid was dissolved in the water and the solution was allowed to stand overnight. The surfactants were added, the solution charged to the reactor, purged with nitrogen and heated to 75°C.

The bicarbonate and the reactor charge of persulphate were then added.

10% of the monomers were quickly added and allowed to react for 10 mins. The remainder of the monomers were then added over three hours, maintaining the reaction temperature between 75 and 80°C. The second initiator solution was added only over the first 2½ hours, with none added during the last ½ hour of reaction. The latex was then held at 75°C for 30 mins, cooled, and stored overnight at room temperature.

Typical Properties

| | |
|---|---|
| Solids | 53.1% |
| pH | 4.6 |
| Viscosity (Brookfield RVF spindle 2, 23°C 20 rpm) cP | 1500 |

EXAMPLE 3

Vinyl Acetate/Bisomer PPM6 (94/6 by wt) Latex - Similar in MFFT to Vinyl Acetate/Veova (70/30 by wt) Latex

Reactor Charge

| | |
|---|---|
| Water | 310 g |
| Cellobond HEC 10T | 4.8 g |
| Sodium Bicarbonate | 1.0 g |
| Antarox CO-850 | 1.0 g |
| Aerosol A102 (31%) | 26.7 g |
| Potassium Persulphate | 0.4 g |

Monomer Mix

| | |
|---|---|
| Vinyl Acetate | 376 g |
| Bisomer PPM6 | 24 g |

Separate Addition

| | |
|---|---|
| Potassium Persulphate | 0.7 g |
| Water | 35 g |

Method

The protective colloid was dissolved in the water and the solution was allowed to stand overnight. The surfactants were added, the solution charged to the reactor, purged with nitrogen and heated to 75°C.

The bicarbonate and the reactor charge of persulphate were then added.

10% of the monomers were quickly added and allowed to react for 10 mins. The remainder of the monomers were then added over three hours, maintaining the reaction temperature between 75° and 80°C. The second initiator solution was added only over the first 2½ hours, with none added during the last ½ hour of reaction. The latex was then held at 75°C for 30 mins, cooled and stored overnight at room temperature.

Typical Properties

| | |
|---|---|
| Solids | 53.1% |
| pH | 4.3 |
| Viscosity (Brookfield RVF, spindle 2 at 23°C) cps | 250 |

EXAMPLE 4

Vinyl Acetate/Bisomer PPM6 (94/6 by wt) Latex - Similar in MFFT to Vinyl Acetate/Veova (70/30 by wt) Latex

Reactor Charge

| | |
|---|---|
| Water | 350 g |
| Cellobond HEC 10T | 10 g |
| Potassium Carbonate | 1.5 g |
| Antarox CO-850 | 30 g |
| Aerosol OT (75%) | 2 g |
| Potassium Persulphate | 0.5 g |

Monomer Mix

| | |
|---|---|
| Vinyl Acetate | 470 g |
| Bisomer PPM6 | 30 g |

Separate Addition

| | |
|---|---|
| Potassium Persulphate | 1.15 g |
| Water | 60 g |

Method

The protective colloid was dissolved in the water and left overnight. The surfactants were then added and whilst purging with nitrogen the solution was brought to 75°C. The persulphate and carbonate were then added and stirred to dissolve. The vinyl acetate and Bisomer PPM6 were mixed together and the mixture agitated whilst purging with nitrogen for 15 mins. 10% of the monomers were quickly added and allowed to react for 10 mins. The remainder of the monomers were then added over three hours maintaining the reaction temperature between 75 and 80°C. The second initiator solution was added only over the first 2½ hours with none added during the last ½ hour of reaction. The latex was then held at 75°C for 30 mins, cooled and stored overnight at room temperature.

Typical Properties

| | |
|---|---|
| Solids | 56.69% |
| pH | 4.7 |
| Viscosity (Brookfield RVF spindle 2 at 23°C) cps | 940 |

EXAMPLE 5

Styrene/Bisomer PPM6/Acrylamide

Reactor

| | |
|---|---|
| Water | 200 |
| Sodium metabisulphate | 0.4 |
| Aerosol A103 (35%) | 3.43 |
| Cellobond HEC 10T | 1.2 |
| Potassium Persulphate | 1.6 |
| Tertiary dodecyl mercaptan | 0.3 |

Monomer Pre-Emulsion

| | |
|---|---|
| Water | 220 |
| Sodium metabisulphite | 0.4 |
| Aerosol A103 (35%) | 8.34 |
| Cellobond HEC 10T | 5.88 |
| Acrylamide | 8 |
| Styrene | 329.2 |
| Bisomer PPM 6 | 62.8 |

METHOD

The monomer emulsion was made up in the order given and placed in the monomer pre-emulsion vessel fitted with a stirrer. The stirrer and nitrogen purge were started. The reactor charge, also made up in the order given above, was placed in the reactor, the stirrer started at a low speed and the nitrogen purging commenced. After 10 minutes the reactor temperature was raised to 55°, the stirrer speed raised and the nitrogen flow reduced to a minimum. The monomer emulsion was added over two hours, maintaining the reaction temperature between 55 and 60°. The latex was held at 60° for one hour after addition. The product was cooled, filtered and stored.

Claims:

1. A polymeric composition capable of forming flexible thermoplastic films and containing a polymer latex and an internal plasticizer, characterised in that the internal plasticizer comprises an adduct of the general formula (I):

$$CH_2 = \underset{|}{\overset{R}{C}} - CO.O(\overset{R^1}{\underset{|}{CH}}.CH_2O)(\overset{R^2}{\underset{|}{CH}}.CH_2O)_nR^3 \qquad (I)$$

wherein R is an H atom, a methyl group or an ethyl group;
$R^1$ is a methyl group or an ethyl group;
$R^2$ is a group selected from methyl, ethyl and phenyl groups;
$R^3$ is an H atom or a $C_1 - C_4$ alkyl group; and
n is an integer from 1 - 20.

2. A polymeric composition according to claim 1 wherein the adducts are prepared by initially esterifying acrylic acid or methacrylic acid with propylene oxide, propylene glycol, butylene oxide or butylene glycol to produce a monohydroxyester and the monoester is thereafter reacted with one or more olefin oxides or glycols either (i) in a step-wise manner, or (ii) with a random mixture of dissimilar olefin oxides or glycols, or (iii) with preformed blocks of polyoxyalkylenes or polyoxyarylenes.

3. A polymeric composition according to claim 2 wherein the olefin oxide reacted with the monohydroxyester is the same as or different from that initially reacted with the acid to produce the monohydroxy ester.

4. A polymeric composition according to claim 2 or 3 wherein the monohydroxy ester is hydroxypropyl methacrylate or hydroxybutyl methacrylate.

5. A polymeric composition according to claim 1 wherein the adduct has the general formula:

$$CH_2 = \overset{CH_3}{\overset{|}{C}}.CO.O(\overset{CH_3}{\overset{|}{C}H}.CH_2O)(\overset{CH_3}{\overset{|}{C}H}.CH_2O)_nH \qquad (II)$$

wherein n represents an integer between 4 and 8.

6. A polymeric composition according to claim 1 wherein the adduct has the general formula:

$$CH_2 = \overset{CH_3}{\overset{|}{C}}.COO(\overset{CH_3}{\overset{|}{C}H}.CH_2O)(\overset{C_2H_5}{\overset{|}{C}H}.CH_2O)_nH \qquad (III)$$

wherein n is an integer between 4 and 8.

7. A polymeric composition according to claim 1 wherein the adducts have a glass transition temperature below -70°C.

8. A polymeric composition according to claim 1 wherein the internal plasticizers comprise the adducts in combination with one or more other monomers including vinyl acetate, styrene, methylmethacrylate, vinyl chloride, vinyl versatate, butyl acrylate and 2-ethylhexyl acrylate.

9. A polymeric composition according to any one of the preceding claims wherein the polymeric latices which are internally plasticised by the adducts are selected from those derived from the polymers and copolymers of vinyl acetate, vinyl chloride, methyl methacrylate and styrene.

10. A polymeric composition according to any one of the preceding claims wherein the amount of the adduct in the composition is between 0.1 and 50% by weight of the total polymeric content of the latex.

European Patent Office

# EUROPEAN SEARCH REPORT

0071405

Application number

EP 82303855.9

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A,D | EP - A1 - 0 014 041 (BP) (06-06-1980)<br>* Claims, especially claim 4 *<br>-- | 1-4, 8,9 | C 08 L 57/04<br>C 08 F 218/08<br>C 08 F 246/00//<br>C 07 C 69/54 |
| A | US - A - 3 329 640 (SCOTTI et al.)<br>* Claims *<br>-- | 1 | |
| A | US - A - 3 957 711 (POWANDA et al.)<br>* Claims *<br>---- | 1 | |

TECHNICAL FIELDS SEARCHED (Int.Cl. 3)

C 08 L 57/00
C 08 F 218/00
C 08 F 246/00
C 07 C 69/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 20-10-1982 | TENGLER |